# EUROPEAN PATENT SPECIFICATION

(11) **EP 1 951 985 B1**
(45) Date of publication and mention of the grant of the patent: **21.05.2014**
(21) Application number: 06824463.1
(22) Date of filing: 21.11.2006
(51) Int. Cl.: E21B 7/02, F16C 25/02, F16C 29/12, B66C 23/70, F16C 29/02

(54) **Boom with bearing**
Ausleger mit Lager
Perche avec palier

(30) Priority: 25.11.2005 SE 0502591
(43) Date of publication of application: 06.08.2008
(73) Proprietor: Atlas Copco Rock Drills AB, SE-701 91 Orebro (SE)
(72) Inventor: SAF, Fredrik, S-719 92 Vintrosa (SE)
(86) International application number: PCT/SE2006/001318
(87) International publication number: WO 2007/061358

(56) References cited:
- FR-A1- 2 535 416
- SE-B- 303 115

## Description

### TECHNICAL AREA

The present invention concerns a telescopically extensible boom comprising a bearing. In particular, a boom as described here concerns a boom in connection with a rock-drilling machine for supporting rock-drilling equipment.

### STATE OF THE ART

A boom of the type described here is used, for example, in connection with a drilling rig that may consist of a carrier provided with the boom stated, on which drilling equipment is arranged. The carrier may be provided with a number of such booms. This type of drilling rig is known and will not be described here. To increase the accessibility and range of a drill arranged on such a boom, the boom is usually extensible by a telescopic means, called telescopically extensible here. This means that the boom has two or more arms that can be displaced axially in relation to each other.

According to the prior art, booms with such telescopes are usually designed with cylindrical arms consisting of two tubes with different diameters. An inner tube that constitutes an inner arm with a smaller diameter can be displaced in another outer tube, an outer arm, with a bigger diameter. Such cylindrical arms have been turned so that they fit inside each other. As a result, the arms have been designed with small dimensional tolerances, in which connection they have been supported well in each other. However, this design requires precise, expensive processing.

In recent times, there has been a desire to use standard cold-rolled tubes in connection with such a telescopic boom, preferably square tubes of a standard type. The outer tube has inner dimensions (the height and width of the tube's cross-section) designed to receive and house, with a relatively narrow tolerance, an inner tube, the outer dimensions of which (the height and width of its cross-section) are adapted to the outer tube.

When using square tubes with the telescopic design described, they obviously cannot be designed with the same narrow tolerances as the turned cylindrical tubes used previously. The surfaces of the flat sides of the square tubes may be somewhat uneven, for which reason there is a tolerance of approximately ± 1 mm between the two tubes that form the arms in the boom.

In order that the inner arm runs fairly frictionlessly in the outer arm, sliding bearings are used between the flat surfaces that are in contact with each other in the two tubes when they slide in relation to each other. An outer set of bearings is usually placed near the end of the outer arm, while an inner set of sliding bearings is positioned at the desired distance from the same end in the outer arm.

It is then quite natural, when working with a drilling rig, with the arms of the boom working with the inner arm extended a long way, for large forces to be exerted on the sliding bearings, which are subject to bending stresses between the two arms. The wear on the sliding bearings can be very high so that they are worn out in a relatively short time. In this case, the sliding bearings have to be adjusted or completely replaced.

With a boom of the type shown above, it is important to have as little play as possible as the boom supports a feeder with a drill that must be applied in a specific drill position using some form of control. Play would affect the precision of the positioning of the drill.

According to the prior art, there are various solutions to the problem of reducing the play in the bearing. In one solution, the bearings have shims added, which is common, for example, for mobile cranes. Another solution is to make the sliding bearings adjustable by means of screws. In this latter case, a sliding bearing that is located on the corresponding flat surfaces between the outer arm and the inner arm is connected to a screw that is fixed in the material of the outer arm and can be screwed in or out in relation to the material, in which connection the sliding bearing is moved correspondingly towards or away from a surface on the inner arm. As the screw's central axis is perpendicular to the longitudinal axis of the boom, large loads will be transferred over such a screw, which means that both the screw and its fixing must be constructed to absorb large forces. It may be necessary to reinforce the material in the outer arm by affixing an additional panel at the location of the adjusting screw, which means that the material of the outer arm has to be welded.

One aim of the present invention is to indicate a solution to the disadvantages demonstrated in the prior art.

The patent document FR 2 535416 teaches a device for a telescopic shalt, according to the preamble of claim 1.

### DESCRIPTION OF THE INVENTION

In accordance with one aspect of the invention, a device is presented that is characterised in accordance with the attached claim 1.

In accordance with another aspect of the invention, a method is presented that is characterised in accordance with the attached independent method claim.

Additional embodiments of the invention are presented in the dependent claims.

The play in the bearing between the telescope's arms, the outer and the inner arm, is adjusted with shims that are applied with wedges. These wedges are controlled with screws, the centre axis of which is parallel to the direction of motion of the moving arm of the telescope. The wedges have a large surface and can transfer forces with a low surface pressure compared with the traditional solution with screws perpendicular to the boom.

The sliding bearings consist of bearing plates which, at least on the side that faces the moving arm, are made of a soft metal, for example bronze. In accordance with a preferred embodiment, in at least the front sliding bearings, the longitudinal edges of the surface of a bearing plate that faces outwards towards a flat surface of the outer arm are bevelled to absorb pivot movements between the two arms better.

Some of the advantages of the solution presented are:
- cheaper processing for a telescope profile as the play in the adjustable sliding bearings can be adjusted for the respective sliding bearings individually for different tolerance outcomes,
- a longer interval between bearing replacements as the bearings can be readjusted,
- the boom body does not need to be processed as the shims are located in a bearing box installed between the surfaces of the outer and inner arms that move in relation to each other.

### BRIEF DESCRIPTION OF THE DRAWINGS

Fig. 1 shows an outline drawing of a boom in accordance with one aspect of the invention in which the boom is equipped with rock-drilling equipment.
Fig. 2 shows an exploded view of a bearing box designed to be inserted from the end of the outer arm in a telescope that constitutes the boom.
Fig. 3 shows, in outline form, the positions of the sliding bearings between the outer and inner arms of the boom in a cross-section of the bearing box at 11 or 12 in accordance with Fig. 2.
Fig. 4 is a side view of the bearing box.
Fig. 5a shows a longitudinal cross-section of a rear sliding bearing, while Fig. 5b shows a corresponding longitudinal cross-section of a front sliding bearing.
Fig. 6 shows an outline of a cross-section of the boom with the outer arm and the inner arm slightly rotated in relation to each other around an axis along the boom, showing just one intermediate sliding bearing.

### EMBODIMENTS

A number of embodiments of the invention are described in the following on the basis of the attached drawings.

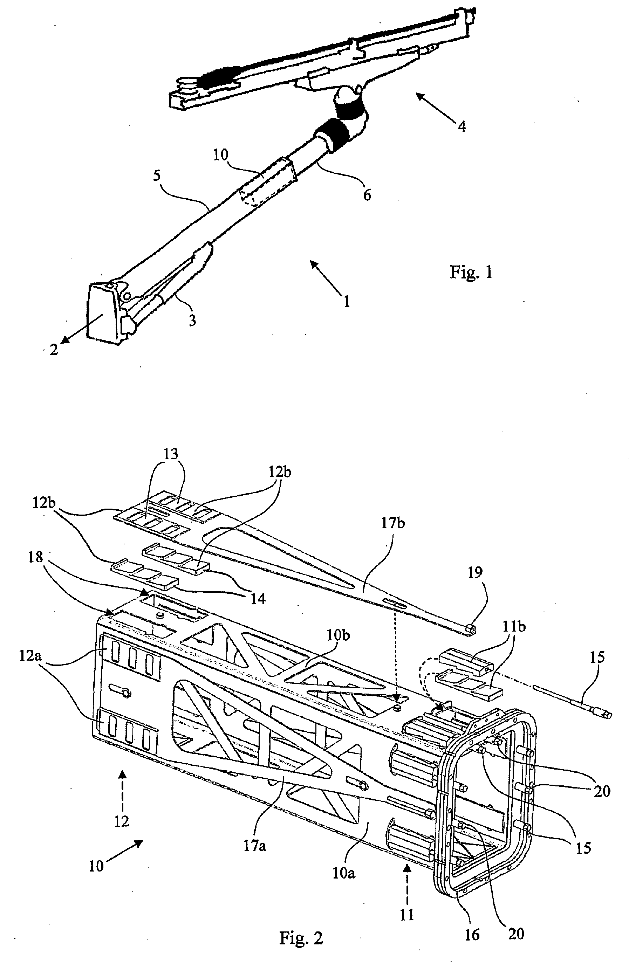

Figure 1 shows an area of application for a bearing in accordance with one aspect of the present invention. A boom 1 of the type in accordance with the invention is flexibly arranged in connection with a carrier 2 for the boom. A working cylinder 3 is flexibly connected with both the carrier 2 and the boom to manoeuvre the boom 1. At the end of the boom 1, an example of rock-drilling equipment 4 handled by the boom 1 is shown. The rock-drilling equipment is of a known type and is not described in further detail here.

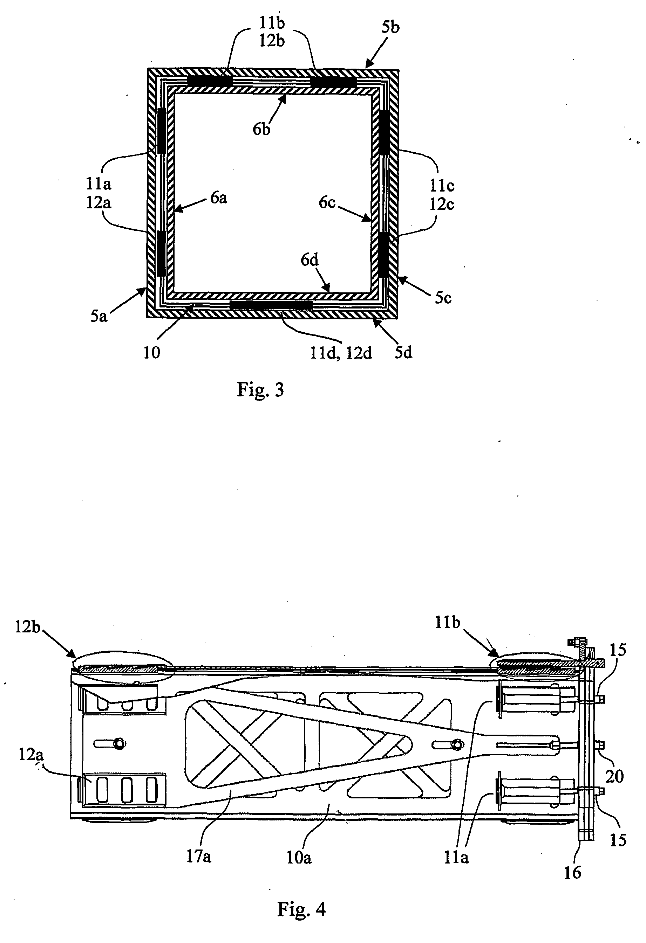

When manoeuvring the drilling equipment and when drilling, the boom 1 needs to be extended to position the drill. For this purpose, the boom 1 is telescopically extensible and is equipped with an outer arm 5 and an inner arm 6. The outer arm 5 consists, in the example, of a square tube that encloses the inner arm 6. The inner arm 6 is thus designed to slide inside and relative to the outer arm 5. In Figure 1, the inner arm 6 is shown almost completely withdrawn into the outer arm 5. Both arms 5 and 6 consist, in the example in accordance with the invention, of square, standard-rolled tubes which thus have four flat side surfaces 5a - 5d and 6a - 6d, which are illustrated in Fig. 3.

The inner arm 6 is supported at one end of the outer arm, here called the front end, by means of a bearing box 10 located between the flat side surfaces 6a - 6d of the inner arm and the flat side surfaces 5a - 5d of the outer arm. The bearing box 10 is designed as a casing with four walls 10a - 10d which together form a square tube construction. The bearing box functions as the support for a number of sliding bearings 11a - 11d in connection with a front set of bearings 11 and a number of sliding bearings 12a - 12d in connection with a rear set of bearings 12 arranged in connection with the bearing box 10 so that the sets of bearings 11, 12 are positioned in connection with a front and a rear cross-section of the boom 1. The sliding bearings are arranged in the walls 10a - 10d of the bearing box between the corresponding flat surfaces of the outer and inner arms that run along each other. In a preferred embodiment, the respective sets of bearings 11, 12 comprise at least two sliding bearings per top surface (5b, 6b) and side surface (5a, 6a and 5c, 6c) of the outer and inner arms of the boom 1, while a single sliding bearing is arranged in connection with the respective sets of bearings 11, 12 in connection with the bottom surfaces (5d, 6d) of the outer and inner arms of the boom 1. The distance between the sets of bearings 11, 12 is determined by the permitted extension of the inner arm 6. The limits are set here by the space between the inner and outer arms and the permitted bearing pressure.

The bearing box 10 is designed to be inserted from the front end of the outer arm 5, after which the inner arm 6 is inserted into the bearing box 10. The bearing box is designed to support the sliding bearings and, in one embodiment, it takes the form of a tubular framework with a square cross-section. The framework is provided with openings in the respective side walls 10a - 10d, at least at the positions where sliding bearings are positioned so that the sliding bearings can press against the surfaces of the outer and inner arms that move in relation to each other and the sliding bearings can thus absorb contact forces between these surfaces. In the example described, at least one bottom sliding bearing 11d is arranged in the front set of bearings 11 and at least one bottom sliding bearing 12d is arranged in the rear set of bearings 12 in openings in the framework. These two bottom sliding bearings 11d, 12d constitute bearings between the bottom surfaces 6d, 5d of the inner arm 6 and the outer arm 5.

As the bottom of the inner arm 6 rests on the inner surface of the bottom surface 5d of the outer arm 5, there is naturally no play, or negligible play, between the bottom sliding bearings 11d, 12d and the arms. There is therefore no need either for any means of adjusting the play for these bottom sliding bearings. These bottom sliding bearings 11d, 12d are simply replaced when they are worn out.

In accordance with the example, other sliding bearings are arranged so that the top wall 10b and the two side walls 10a, 10c of the bearing box 10 are each provided with a pair of sliding bearings per wall for the front and rear sets of bearings 11, 12, respectively. Openings in these walls adapted to the respective areas of the sliding bearings are arranged to receive the sliding bearings in the said openings. The sliding bearings 11a - 11d, 12a - 12d are therefore guided into the correct position and retain this position when the arms 5, 6 move in relation to each other.

In order for the sliding bearings in the top wall 10b and at the side walls 10a, 10c to retain acceptable play between the surface of the sliding bearing and the respective walls of the boom 1, they are designed to be adjustable and are therefore called adjustable sliding bearings 11a - 11c, 12a - 12c. These adjustable sliding bearings are designed as two bearing plates 13, 14 in contact with each other, see Figure 3, in which an outer bearing plate 13 is designed for contact with the inside of one of the flat side surfaces of the outer arm 5, while an inner bearing plate 14 is designed for contact with the outside of the corresponding flat side surface of the inner arm 6. The outer bearing plate 13 assumes a fixed position in relation to the outer arm 5 and may be made of a durable material, for example steel or another equivalent material known to an expert. The inner arm 6, however, slides in relation to the inner bearing plate 14 in connection with telescopic movement of the boom 1. The inner bearing plate 14 is made of a bearing metal, for example bronze. NB. The reference numbers 13 and 14 for the bearing plates are used throughout for the sake of simplicity for all adjustable sliding bearings 11a - 11c, 12a - 12c.

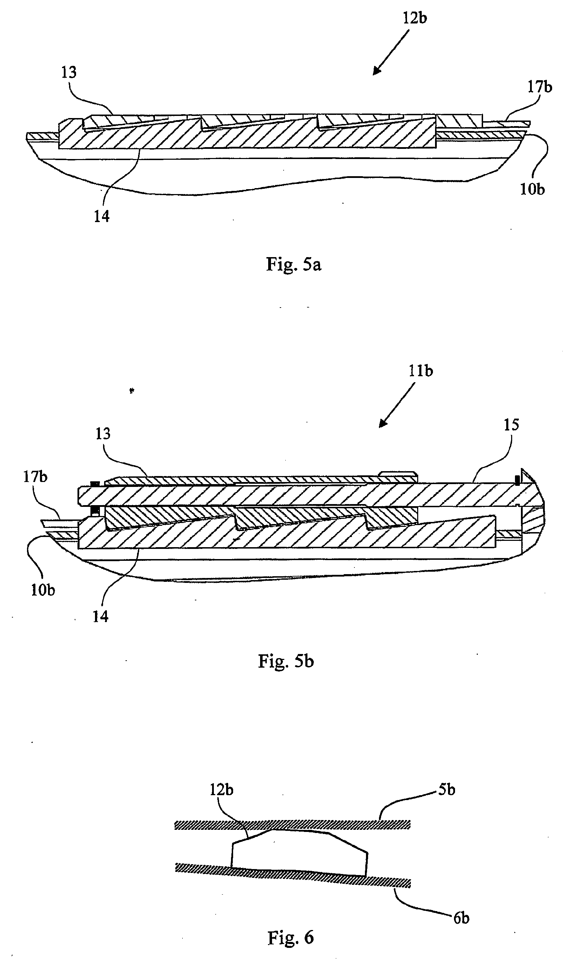

The adjustable sliding bearings 11a - 11c, 12a - 12c are adjustable because the surfaces that face each other on the outer 13 and inner 14 bearing plates (Figs. 5a, 5b) in each such sliding bearing are designed with wedge-shaped steps of uniform design. These wedge-shaped steps engage fully with each other when the bearing plates 13, 14 are fully pushed in against each other, i.e. the respective wedge-shaped steps on the inner bearing plate 14 are fully received and fill up the spaces between the steps on the outer bearing plate 13. This is possible because the steps are of a symmetrical design on the respective bearing plates 13, 14. When one of the bearing plates is moved axially, the steps will climb out onto each other, which means, in turn, that the thickness of the sliding bearing increases because the outer 13 and inner 14 bearing plates are forced to withdraw from each other.

As the adjustable sliding bearings 11a - 11c, 12a - 12c are made in the manner described, it is, therefore, possible to adjust and readjust the play in the sliding bearings in the bearing box 10 by thus displacing the bearing plates 13, 14 of the respective sliding bearings in relation to each other.

The adjustability of the sliding bearings in the front set of bearings 11 is arranged by adjustment devices in the form of first adjusting screws 15 being arranged at the front end of the bearing box. The adjusting screws 15 are seated in an end flange 16 in the bearing box 10. The respective adjusting screws 15 are, in turn, threaded in an axial direction in the outer bearing plate 13 of a sliding bearing. By screwing the adjusting screw 15 in an axial direction, the outer bearing plate 13 will be pulled towards the end of the bearing box, which means that the inner 14 and the outer 13 bearing plates withdraw from each other transversally, as the inner bearing plate 14 is fixed in position in the opening of the bearing box 10 for the sliding bearing's inner bearing plate. The thickness of the sliding bearing increases and the play between the surfaces of the sliding bearing and the outer 5 and inner 6 arms' surfaces in contact with the sliding bearing decreases. The respective adjustable sliding bearings 11a, 11b, 11c in the front set of bearings 11 are adjusted accordingly in accordance with the example. The term first adjusting screws must include an equivalent device that consists of a threaded rod fixed to the outer bearing plate 13, where a nut at the flange 16 moves the rod axially. Moreover, the term must also include another rod fixed to the bearing plate 13, where another form of tightening device moves the rod axially.

In the rear set of bearings 12, the adjustability of the adjustable sliding bearings 12a, 12b, 12c is arranged by the outer bearing plates 13 in the respective sliding bearings being integrated in carriers 17a, 17b, 17c which function as adjustment devices for the rear sliding bearings. An example of this arrangement is shown in Fig. 2, in which a carrier 17b is illustrated at the top wall 10b of the bearing box 10 with an associated pair of integrated outer bearing plates 13 from the rear adjustable sliding bearings 12b. The inner bearing plates 14 are adapted to the openings 18 in the top wall 10b. As a result of this, the inner bearing plates 14 are fixed in position in relation to the bearing box 10 in the plane of the top wall 10b. In its normal position, the carrier 17b is in contact with the top wall 10b so that the wedge-shaped steps of the outer bearing plates 13 engage with the receiving wedge-shaped steps of the inner bearing plates 14. In accordance with one embodiment, the front end of the carrier 17b is provided with a threaded bush 19. Another adjusting screw 20 for the rear sliding bearings 12b is seated in connection with the end flange 16 and is arranged in an axial direction. The adjusting screw 20 is threaded in the bush 19 on the carrier 17b. By tightening the adjusting screw 20, the carrier 17b is pulled towards the end of the bearing box 10, whereby the bearing plates 13 and 14 in the sliding bearings 12b withdraw transversally from each other on account of the intermediate wedge-shaped steps, which means that the rear sliding bearings 12b increase in thickness. In this way, the play in connection with the rear sliding bearings 12b can be adjusted with the adjusting screw 20. Correspondingly, carriers for the sides of the bearing box are designed to adjust the rear sliding bearings 12a, 12c on the walls 10a, 10c of the bearing box 10. In the figures, the outer bearing plates 13, which are integrated in the carriers 17a - 17c, have rectangular holes. This has no structural effect here, but is done only because the space between the outer 5 and the inner 6 arm is tight, whereby, in the example shown, the wedge-shaped step structure of the bearing plates causes there to be hardly any space for material in the outer bearing plates 13 in the areas in which the inner bearing plates 14 are thickest. See Figure 5a. The term other adjusting screws must include a corresponding device that consists of a threaded rod fixed to the carrier 17b, where a nut in connection with the flange 16 moves the carrier axially. The term must also include another rod fixed to the bearing plate 13, where another form of tightening device moves the rod axially.

As described here, the play of all adjustable sliding bearings 11a - 11c, 12a - 12c is adjustable from the end of the bearing box 10. The sliding bearings are adjusted by displacing one bearing plate of the sliding bearings in an axial direction. The adjusting screws are accessible from the front of the outer arm 5 of the boom 1, which means that no intervention or processing is required on the body of the boom 1. As the bearing plates 13, 14 in the respective sliding bearings 11a - 11c, 12a - 12c are in contact with each other with relatively large contact surfaces, the sliding bearings can absorb the large forces transferred transversally via the outer and inner arms of the boom. This removes one disadvantage of the prior art, in which the forces are absorbed by the adjusting screws.

It is common for sliding bearings to be made with a rectangular cross-section, which means that the sliding bearings have longitudinal edges. Longitudinal edges occur, among other places, in connection with the sliding surface of the sliding bearing that is not fixed in a holder, for example the surface of sliding bearings 11a - 11c, 12a - 12c that faces the flat surfaces of the outer arm 5. When large forces need to be transferred via the sliding bearings, it may be inappropriate to have these edges as there is a risk of edge contact in connection with the inner arm performing a pivot movement in relation to the outer arm, i.e. the inner arm 6 performing a small rotational movement around the longitudinal axis of the boom 1. Such edge contact may cause fast wear to the sliding bearing.

In accordance with another aspect of the invention, another embodiment is presented in which edge contact is avoided by the longitudinal edges of the sliding bearing being bevelled, as shown in Figure 6. The bevelling in accordance with the example is performed in this case on the longitudinal edges of the side surface of the outer bearing plate 13 that faces the outer arm 5 in the boom 1. The bevelling is performed so that the sliding bearing's wearing surface is plane while the longitudinal edges on the back of the sliding surface are bevelled. This may, of course, be done in reverse, i.e. the sliding bearing has a plane back and is in contact with a holder that is bevelled correspondingly and fixed to the arm that does not move in relation to the sliding bearing.

An advantage of this embodiment is that more even pressure distribution is achieved between the sliding bearing and the flat surface applied. Another example is that a cheaper profile can be used in the arms in the boom, as the processed surface of one bearing seat and the surface of the applied flat surface of the sliding bearing in connection with the boom do not necessarily have to be fully parallel.

Figure 6 shows an example of the bevelling of the longitudinal edges of the sliding bearings 11a - 11c, 12a - 12c (shown in the figure only for one sliding bearing 12b) as described above, where the inner arm 6 is shown rotated around an axis that is parallel to the boom 1. For the sake of clarity, the rotation has been exaggerated in the figure. The figure shows that the outer arm's 5 contact with the longitudinal edge of the sliding bearing is against a longitudinal edge formed between two side surfaces of the sliding bearing, where the angle between the side surfaces in question is much more obtuse than 90 degrees. The inner arm 6 is shown in the figure only in part in the form of its top surface 6b, while the outer arm 5 is shown only by its top surface 5b.

## Claims

1. A telescopically extensible boom (1) comprising an outer arm (5) with a rear end connected to a carrier (2) for the boom (1) and a front end and an inner arm (6) arranged in this front end that can be displaced axially inside the outer arm (5), the outer and inner arms consisting of square tubes, flat surfaces of the inner arm (6) running along corresponding flat surfaces of the outer arm (5), the boom (1) having four longitudinal sides, and comprising a bearing and being
**characterised in that**:
- the bearing comprises a bearing box (10) designed as a casing with four walls (10a - 10d), which together form a square tube structure,
- the bearing box (10) comprises a number of sliding bearings (11a - 11d, 12a - 12d) and is inserted into the front end of the outer arm (5) between the outer arm (5) and the inner arm (6),
- the sliding bearings (11a - 11d, 12a - 12d) are arranged in the walls (10a - 10d) of the bearing box (10) and are applied against the outer (5) and the inner (6) arms' corresponding flat surfaces that run along each other,
- in connection with at least one wall (10a - 10c) of the bearing box, axially mounted adjustment devices (15, 20, 17a - 17c) are arranged for adjusting the thickness of at least one sliding bearing (11a - 11c, 12a - 12c) and thus for adjusting the play between the surfaces of the inner arm (6) and the outer arm (5) applied against at least one sliding bearing.

2. A boom in accordance with claim 1, where the bearing box (10) is provided with one front set of bearings (11) comprising at least one sliding bearing (11a - 11d) in connection with each wall (10a - 10d) of the bearing box (10) and one rear set of bearings (12) comprising at least one sliding bearing (12a - 12d) in connection with each wall (10a - 10d) of the bearing box (10).

3. A boom in accordance with claim 2, where openings (18) in the walls (10a - 10d) of the bearing box (10) constitute the seat of the sliding bearings (11a - 11d, 12a - 12d).

4. A boom in accordance with claim 3, where the sliding bearings (11a - 11d, 12a - 12d) in connection with at least one wall (10a - 10d) of the bearing box (10) comprise an outer bearing plate (13) of a resistant material, for example steel, and an inner bearing plate (14) made of a bearing metal, whereby surfaces facing each other of the stated outer and inner bearing plates have a profile with wedge-shaped steps.

5. A boom in accordance with claim 4, where the adjustment devices consist of first adjusting screws (15) that are fixed at one end to the outer bearing plates (13) of the sliding bearings (11a - 11d) and are supported at the other end in a seat in connection with an end flange (16) belonging to the bearing box wherein the play can be adjusted using the adjusting screws (15) via axial displacement of the outer bearing plate (13) in relation to the inner bearing plate (14).

6. A boom in accordance with claim 4, where the adjustment devices for the rear sliding bearings (12a - 12d) consist of carriers (17a - 17c) that are fixed at one end as carriers to the outer bearing plates (13) of the sliding bearings (12a - 12 c) and, at the other end, have other adjusting screws (20) that are supported in a seat in connection with an end flange (16) belonging to the bearing box wherein the play can be adjusted using the adjusting screws (20) via axial displacement of the outer bearing plate (13) in relation to the inner bearing plate (14).

7. A boom in accordance with any of claims 1, 5 or 6, where the sliding bearings (11a - 11d, 12a - 12d) have a wearing surface facing the displaceable arm (6) and an opposite back surface, where the edges of the back surface that extend axially are bevelled.

8. A drilling rig comprising a carrier (2) and a boom (1) in accordance with claim 1.

9. A method for adjusting the bearing play for a telescopically extensible boom (1) according to claim 1, wherein
- the bearing play between at least one sliding bearing (11a - 11c, 12a - 12c) and the surfaces of the inner arm (6) and the outer arm (5) applied against at least one sliding bearing is adjusted by adjusting the adjustment device so that the thickness of the sliding bearing is changed.

10. A method in accordance with claim 9, also including the steps:
- the sliding bearings (11a - 11c, 12a - 12c) consist of an outer bearing plate (13) that is in contact with an inner bearing plate (14),
- the contact surfaces between the outer and inner bearing plates in the respective sliding bearings are designed with corresponding wedge-shaped step profiles with steps that engage with each other,
- one type of bearing plate is supported in the seats in the bearing box (10),
- the other type of bearing plate is in contact with the adjustment devices,
- when manoeuvring an adjustment device, the two types of bearing plates are displaced in relation to each other axially, whereby the step profile of the bearing plates causes the thickness of the sliding bearing to be varied, with the result that the bearing play is changed.

## Patentansprüche

1. Teleskopisch ausfahrbarer Ausleger (1) umfassend einen äußeren Arm (5) mit einem rückwärtigen mit einem Träger (2) für den Ausleger (1) verbundenen Ende und einem vorderen Ende, und einen inneren Arm (6), der in diesem vorderen Ende angeordnet ist und der axial im äußeren Arm (5) verschoben werden kann, wobei der äußere und der innere Arm aus rechteckigen Rohren bestehen, wobei flache Oberflächen des inneren Arms (6) entlang entsprechenden flachen Oberflächen des äußeren Arms (5) laufen, der Ausleger (1) vier Längsseiten hat und ein Lager enthält, und **dadurch gekennzeichnet, dass**:
- das Lager ein Lagergehäuse (10) umfasst, das als ein Gehäuse mit vier Wänden (10a -10d), die gemeinsam eine rechteckige Rohrstruktur bilden, ausgeführt ist,
- das Lagergehäuse (10) eine Anzahl an Gleitlagern (11a-11d, 12a-12d) umfasst und in das vordere Ende des äußeren Arms (5) zwischen dem äußeren Arm (5) und dem inneren Arm (6) eingebracht ist,
- die Gleitlager (11a-11d, 12a-12d) in den Wänden (10a-10d) des Lagergehäuses (10) angeordnet sind und auf den dem äußeren (5) und dem inneren Arm (6) entsprechenden flachen Oberflächen, die aneinander entlang laufen aufgebracht sind,
- in Verbindung mit mindestens einer Wand (10a-10c) des Lagergehäuses axial montierte Einstellungsvorrichtungen (15, 20, 17a-17c) zum Einstellen der Dicke mindestens eines Gleitlagers (11a-11c, 12a-12c) und damit zum Einstellen des Spiels zwischen den Oberflächen des inneren Arms (6) und des äußeren Arms (5), das bei mindestens einem Gleitlager angewandt wird, angeordnet sind.

2. Ausleger gemäß Anspruch 1, wobei das Lagergehäuse (10) mit einem vorderen Satz Lager (11) versehen ist, die zumindest ein Gleitlager (11a-11d) in Verbindung mit jeder Wand (10a-10d) des Lagergehäuses (10) umfassen, und mit einem rückwärtigen Satz Lager (12) versehen ist, die zumindest ein Gleitlager (12a-12d) in Verbindung mit jeder Wand (10a-10d) des Lagergehäuses (10) umfassen.

3. Ausleger nach Anspruch 2, wobei die Öffnungen (18) in den Wänden (10a-10d) des Lagergehäuses (10) den Sitz der Gleitlager (11a-11d, 12a-12d) bilden.

4. Ausleger gemäß Anspruch 3, wobei die Gleitlager (11a-11d, 12a-12d) in Verbindung mit mindestens einer Wand (10a-10d) des Lagergehäuses (10) eine äußere Lagerplatte (13) aus einem widerstandsfähigem Material, z. B. Stahl, und eine innere Lagerplatte (14) hergestellt aus einem Lagermetall umfassen, wobei die einander zugewandten Oberflächen der genannten äußeren und inneren Lagerplatten ein Profil mit keilförmigen Stufen haben.

5. Ausleger gemäß Anspruch 4, wobei die Einstellungsvorrichtungen aus ersten Einstellungsschrauben (15), die an einem Ende an den äußeren Lagerplatten (13) der Gleitlager (11a-11d) fixiert sind und am anderen Ende in einem Sitz in Verbindung mit einem Endflansch (16), der zum Lagergehäuse gehört, abgestützt sind, bestehen, wobei das Spiel unter Verwendung der Einstellschrauben (15) über axiale Verschiebung der äußeren Lagerplatte (13) in Bezug auf die innere Lagerplatte (14) eingestellt werden kann.

6. Ausleger gemäß Anspruch 4, wobei die Einstellungsvorrichtungen für die rückwärtigen Gleitlager (12a-12d) aus Trägern (17a-17c), die an einem Ende als Träger an den äußeren Lagerplatten (13) der Gleitlager (12a-12c) fixiert sind und am anderen Ende andere Einstellschrauben (20) haben, die in einem Sitz in Verbindung mit einem Endflansch (16), der zum Lagergehäuse gehört, abgestützt sind, bestehen, wobei das Spiel unter Verwendung der Einstellschrauben (20) über axiale Verschiebung der äußeren Lagerplatte (13) in Bezug auf die innere Lagerplatte (14) eingestellt werden kann.

7. Ausleger gemäß einem der Ansprüche 1, 5 oder 6, wobei die Gleitlager (11a-11d, 12a-12d) eine dem verschiebbaren Arm (6) zugewandte Verschleißschicht und eine gegenüberliegende rückwärtige Oberfläche haben, wobei die Ränder der rückwärtigen Oberfläche die sich axial erstrecken, abgeschrägt sind.

8. Bohrausrüstung mit einem Träger (2) und einem Ausleger (1) gemäß Anspruch 1.

9. Verfahren zum Einstellen des Lagerspiels für einen teleskopisch ausfahrbaren Ausleger (1) gemäß Anspruch 1, wobei das Lagerspiel zwischen mindestens einem Gleitlager (11a-11c, 12a-12c) und den Oberflächen des inneren Arms (6) und des äußeren Arms (5) die auf mindestens ein Gleitlager aufgebracht sind, eingestellt wird, indem die Einstellvorrichtung so eingestellt wird, dass die Dicke des Gleitlagers geändert wird.

10. Verfahren gemäß Anspruch 9 auch enthaltend die Schritte, dass:
- die Gleitlager (11a-11c, 12a-12c) aus einer äußeren Lagerplatte (13) bestehen, die in Kontakt mit einer inneren Lagerplatte (14) ist,
- die Kontaktflächen zwischen der äußeren und der inneren Lagerplatte in den entsprechenden Gleitlagern mit entsprechenden keilförmigen Stufenprofilen mit Stufen, die ineinander eingreifen, ausgestaltet sind,
- eine Art von Lagerplatte in den Sitzen im Lagergehäuse (10) getragen wird,
- die andere Art von Lagerplatte in Kontakt mit den Einstellungsvorrichtungen ist,
- wenn eine Einstellvorrichtung manövriert wird die beiden Arten von Lagerplatten in Bezug zueinander axial verschoben werden, wobei das Stufenprofil der Lagerplatten bewirkt, dass die Dicke des Gleitlagers variiert wird mit der Folge, dass das Lagerspiel geändert wird.

## Revendications

1. Une perche télescopique extensible (1) constituée d'un bras extérieur (5) avec une extrémité arrière reliée à un support (2) pour la perche (1) et une extrémité avant et un bras intérieur (6) disposé dans cette extrémité avant, qui peut être déplacé de manière axiale à l'intérieur du bras extérieur (5), les bras extérieurs et intérieurs étant composés de tubes carrés, les surfaces planes du bras intérieur (6) longeant les surfaces planes correspondantes du bras extérieur (5), la perche (1) disposant de quatre côtés longitudinaux et étant constituée d'un palier et se caractérisant de la manière suivante :
- le palier est composé d'une boîte de roulement (10) conçue comme un boîtier avec quatre parois (10a - 10d), qui forment ensemble une structure de tube carré,
- la boîte de roulement (10) est constituée d'un certain nombre de paliers lisses (11a - 11d, 12a - 12d) et elle est insérée dans l'extrémité avant du bras extérieur (5) entre le bras extérieur (5) et le bras intérieur (6),
- les paliers lisses (11a- 11d, 12a - 12d) sont disposés dans les parois (10a - 10d) de la boîte de roulement (10) et sont appliqués contre les surfaces planes correspondantes des bras extérieurs (5) et intérieurs (6) qui se longent,
- en liaison avec au moins l'une des parois (10a - 10c) de la boîte de roulement, les appareils de réglage montés de manière axiale (15, 20, 17a - 17c) sont disposés afin de pouvoir ajuster l'épaisseur d'au moins un palier lisse (11a - 11c, 12a - 12c) et ainsi de régler le jeu entre les surfaces du bras intérieur (6) et du bras extérieur (5) appliqué à au moins un palier lisse.

2. Une perche conforme à la revendication 1, dans le cadre de laquelle la boîte de roulement (10) est fournie avec un jeu de paliers avants (11) constitué d'au moins un palier lisse (11a - 11d) relié à chaque paroi (10a - 10d) de la boîte de roulement (10) et d'un jeu de paliers arrières (12) constitué d'au moins un palier lisse (12a -12d) relié avec chaque paroi (10a - 10d) de la boîte de roulement (10).

3. Une perche conforme à la revendication 2, où les ouvertures (18) des parois (10a - 10d) la boîte de roulement (10) constitue un siège pour les paliers lisses (11 a - 11 d, 12a - 12d).

4. Une perche conforme à la revendication 3, dans le cadre de laquelle les paliers lisses (11a-11d, 12a-12d) en lien avec au moins une paroi (10a-10d) de la boîte de roulement (10) sont constitués d'une plaque de support extérieure (13) à partir d'un matériau résistant, comme de l'acier, et d'une plaque de support intérieure (14) fabriquée en métal antifriction, de sorte que les surfaces des plaques de support extérieures et intérieures se faisant face affichent un profil de marches en forme de coin.

5. Une perche conforme à la revendication 4, dans le cadre de laquelle les appareils de réglage sont constitués de vis de réglage initial (15) fixées à une extrémité des plaques de support extérieures (13) des paliers lisses (11a- d) et qui sont soutenues à l'autre extrémité par un siège lié à une bride d'extrémité (16) appartenant à la boîte de roulement dans laquelle le jeu peut être ajusté à l'aide des vis de réglage (15) via un déplacement axial de la plaque de support extérieure (13) reliée à la plaque de support intérieure (14).

6. Une perche conforme à la revendication 4, dans le cadre de laquelle les appareils de réglage des paliers lisses arrières (12a - 12d) sont constitués de supports (17a - 17c) fixés comme tels à une extrémité des plaques de support extérieures (13) des paliers lisses (12a -12c) et disposent, à l'autre extrémité, d'autres vis de réglage (20) qui sont soutenues par un siège lié à une bride d'extrémité (16) appartenant à la boîte de roulement dans laquelle le jeu peut être ajusté à l'aide des vis de réglage (20) via un déplacement axial de la plaque de support extérieure (13) reliée à la plaque de support intérieure (14).

7. Une perche conforme à toute revendication 1, 5, 6 dans le cadre de laquelle les paliers lisses (11a lid, 12a - 12d) disposent d'une surface de frottement face au bras mobile (6) et d'une surface arrière opposée, où les extrémités de la surface arrière qui s'étend de manière axiale sont biseautées.

8. Un appareil de forage constitué d'un support (2) et d'une perche (1) conformément à la revendication 1.

9. Une méthode de réglage du jeu de palier pour une perche télescopique extensible (1) conformément à la revendication 1, dans le cadre de laquelle
- le jeu de palier entre au moins un palier lisse (11a - 11c, 12a - 12c) et les surfaces du bras intérieur (6) et du bras extérieur (5) appliqué à un jeu de palier au moins est réglé en ajustant l'appareil de réglage de manière à ce que l'épaisseur du palier lisse soit modifiée.

10. Une méthode conforme à la revendication 9, incluant également les étapes suivantes :
les paliers lisses (11a - 11c, 12a - 12c) sont constitués d'une plaque de support extérieure (13) qui est en contact avec la plaque de support intérieure (14),
- les surfaces de contact entre les plaques de support extérieures et intérieures dans les paliers lisses
respectifs sont conçues avec un profil de marche en forme de coin avec des marches qui se maintiennent en contact, l'un des types de plaque de support est soutenu dans les sièges de la boîte de roulement (10);
- l'autre type de plaque de support est en contact avec les appareils de réglage,
- en manoeuvrant l'appareil de réglage, deux types de plaques de support sont déplacés l'un par rapport à l'autre de manière axiale, de sorte que le profil de marche des plaques de support entraîne la variation de l'épaisseur du palier lisse, résultant dans une modification du jeu de palier.
